# EUROPÄISCHE PATENTSCHRIFT

(11) **EP 1 764 287 B1**
(45) Veröffentlichungstag und Bekanntmachung des Hinweises auf die Patenterteilung: **21.04.2010**
(21) Anmeldenummer: 06017414.1
(22) Anmeldetag: 22.08.2006
(51) Int. Cl.: B62D 25/06, B62D 25/02

(54) **Karosseriesäule eines Kraftfahrzeugs, seitlicher Dachkanal und dreischenkelige Knotenverbindung**
Motor vehicle door pillars, roof rail and coupling members with three arms
Montant de carrosserie de véhicule, rail de toit et noeud d'assemblage à trois branches

(30) Priorität: 15.09.2005 DE 102005044063
(43) Veröffentlichungstag der Anmeldung: 21.03.2007
(73) Patentinhaber: GM Global Technology Operations, Inc., Detroit, MI 48265-3000 (US)
(72) Erfinder: Mildner, Udo, 65550 Limburg (DE)
(74) Vertreter: Strauss, Peter

(56) Entgegenhaltungen:
- GB-A- 2 289 028
- US-A- 4 634 173
- US-A- 4 775 181
- US-B1- 6 578 909

## Beschreibung

Die Erfindung betrifft die Karosseriesäule eines Kraftfahrzeugs in Form eines Hohlprofils mit einem innenliegenden Profilteil, einem außenliegenden Profilteil und einem in der Säule angeordneten Verstärkungsblech. Weiterhin betrifft die Erfindung einen seitlichen Dachkanal und eine dreischenkelige Knotenverbindung zum Verschweißen der Karosseriesäule mit dem seitlichen Dachkanal.

Zwecks Verbesserung des Insassenschutzes werden die Anforderungen an Kraftfahrzeugkarosserien zukünftig steigen. Insbesondere werden zukünftig die Crashanforderungen bei höheren Crash-Geschwindigkeiten zu erfüllen sein. Dies macht es notwendig, zukünftige Karosserien bezüglich ihrer Verwindungssteifigkeit und damit verbunden bezüglich ihrer Fahrdynamik zu verbessern.

Ein wichtiger Aspekt der Verbesserung der Karosseriestruktur besteht in der Vergrößerung der Karosserie- bzw. Torsionssteifigkeit durch die Auslegung der Strukturknoten. Durch eine bessere Anbindung der einzelnen Blechteile kann die Karosseriesteifigkeit erhöht werden, bzw. bei gleicher Karosseriesteifigkeit die Materialdicke und damit auch das Gewicht reduziert duziert werden.

Die DE 101 16 437 A1 beschreibt eine Kfz-Karosserie, bei dem das Oberteil des Heckfensterrahmens eine seitlich nach außen gerichtete Verlängerung aufweist um denjenigen Knoten zu versteifen, der den Heckfensterrahmen mit dem Dachrahmenprofil und der C-Säule verbindet.

Die US 4 775 181 A beschreibt Verlängerungen in einem außenliegenden Profilteil einer heckseitigen Säule.

Verlängerungen einer frontseitigen Säulenunterstützung sind aus der US 6 578 909 B1 bekannt.

Die EP 1 153 819 A1 beschreibt eine Karosseriegrundaufbau, bei dem das vordere Dachrahmenprofil und die A-Säule mit einem separaten Ansatzstück verbunden werden.

Aufbauend auf diesem Stand der Technik ist es die Aufgabe der vorliegenden Erfindung, einen Strukturknoten für die Verbindung der Karosseriesäulen mit dem jeweiligen Dachrahmenprofil, und insbesondere für die Verbindung der A-Säule mit dem vorderen Dachrahmenprofil sowie dem seitlichen Dachkanal, bereitzustellen, der eine höhere Karosseriesteifigkeit mit sich bringt.

Die Lösung dieser Aufgabe erfolgt mit den Merkmalen der unabhängigen Ansprüche. Vorteilhafte Weiterbildungen werden durch die Merkmale der abhängigen Ansprüche wiedergegeben.

Ein erster Aspekt der erfindungsgemäßen Lösung bezieht sich auf eine Karosseriesäule eines Kraftfahrzeugs. Eine bekannte Karosseriesäule hat die Form eines Hohlprofils und umfasst ein innenliegenden Profilteil, ein außen liegendes Profilteil und ein in der Säule angeordneten Verstärkungsblech. Erfindungsgemäß ist zusätzlich im Anbindungsbereich Säule-Dachrahmen ein mit einem Prägefeld versehenes Ansatzstück vorgesehen. Dieses dient zum Verschweißen der Säule mit dem seitlichen Dachkanal. Hierdurch wird die Seitenwand an das quer zur Fahrtrichtung verlaufende Strukturteil Dachrahmen angebunden was die Torder Karosserie erhöht, den Fahrzeuginsassenschutz bei einem Zusammenprall verbessert, und sichtbare Beulen im Dach nach einem Zusammenprall mindert oder sogar vermeidet. Bei gleicher Torsionssteifigkeit kann die Materialdicke ohne zusätzliche Kompensationsmaßnahmen reduziert werden was das Fahrzeuggewicht herabsetzt und den Treibstoffverbrauch mindert.

In einer ersten Ausgestaltung der Karosseriesäule sind das Ansatzstück und das innenliegende Profilteil einstückig ausgebildet. Das innenliegende Profilteil besitzt dann im Anbindungsbereich ein seitlich nach innen angeformtes Ansatzteil, dessen Prägefeld mit dem seitlichen Dachkanal verschweißbar ist. Auf diese Weise werden die Seitenwand, bzw. das innenliegende Profilteil der Karosseriesäule dieser Seitenwand, und der Dachrahmen verschweißt.

Weiterhin sind das Ansatzstück und das Verstärkungsblech einstückig ausgebildet. In diesem Fall besitzt das Verstärkungsblech im Anbindungsbereich ein seitlich nach innen angeformtes Ansatzteil, dessen Prägefeld mit dem seitlichen Dachkanal verschweißbar ist. Auch hierdurch werden Seitenwand und Dachrahmen miteinander verschweißt was die Karosseriesteifigkeit verbessert.

Die beiden vorgenannten Ausführungsformen lassen sich auch kombinieren. So können sowohl das Verstärkungsblech als auch das innenliegende Profilteil ein Ansatzstück besitzen. Beide Säulenteile besitzen dann korrespondierende Prägefelder, die zusammen mit dem seitlichen Dachkanal in letztlich drei Blechlagen miteinander verschweißt werden.

Die mit dem Prägefeld verbesserte Anbindung des Dachrahmens mit der Karosseriesäule ist bevorzugt in einem Bereich bis etwa 13 cm vom innenliegenden Profilteil aus gesehen angeordnet.

Die oben genannte verstärkte Karosseriesäule kann eine B-Säule, eine C-Säule oder bevorzugt eine A-Säule sein. Im letztgenannten Fall dient das Prägefeld zum Verschweißen der A-Säule, und damit der Seitenwand, mit dem vorderen Dachrahmenprofil sowie dem seitlichen Dachkanal.

Die oben genannten Ausführungsformen stellen ein Prägefeld als Bestandteil einer Säulenkomponente bereit, sodass die jeweilige Säulenkomponente mit dem Dachrahmen verschweißt werden kann. Spiegelbildlich hierzu ist in einem zweiten Aspekt der Erfindung vorgesehen, das Dachrahmenprofil und das Ansatzstück einstückig auszubilden. Hierzu besitzt das Dachrahmenprofil ein seitlich nach außen angeformtes und mit einem Prägefeld versehenes Ansatzstück. In diesem Fall ist das Prägefeld mit dem innenliegenden Profilteil einer Karosseriesäule und/oder deren Verstärkungsblech verschweißbar.

Es versteht sich von selbst, dass die Ausführungsformen des ersten und des zweiten Aspekts der Erfindung miteinander kombiniert werden können um eine besonders stark ausgeprägte Verbesserung der Torsionssteifigkeit zu erreichen.

In der Erfindung kann, das vorgenannte Ansatzstück ein separates Bauteil in Gestalt einer dreischenkeligen Knotenverbindung sein, wie bei der oben genannten EP 1 153 819 A1. Diese dreischenkelige Knotenverbindung wird zum einen mit dem innenliegenden Profilteil der Karosseriesäule, und zum anderen mit dem Dachrahmen verschweißt. Zusätzlich besitzt sie ein Prägefeld, mit dem im eingebauten Zustand der dreischenkeligen Knotenverbindung den seitlichen Dachkanal einerseits und die Säule andererseits verschweißt sind.

Weitere Merkmale und Vorteile der Erfindung werden aus der folgenden detaillierten Beschreibung mit Bezug auf die beigefügten Zeichnungen erkennbar die nachfolgend als nicht beschränkende Beispiele gegeben sind. Es stellt dar:
- Fig. 1: eine perspektivische Seitenansicht einer Karosserie nach dem Stand der Technik,
- Fig. 2: den Strukturknoten, der die A-Säule mit dem vorderen Dachrahmenprofil verbindet, in seitlicher Draufsicht,
- Fig. 3: den Schnittverlauf B-B der Fig. 2,
- Fig. 4: den Schnittverlauf C-C der Fig. 3.

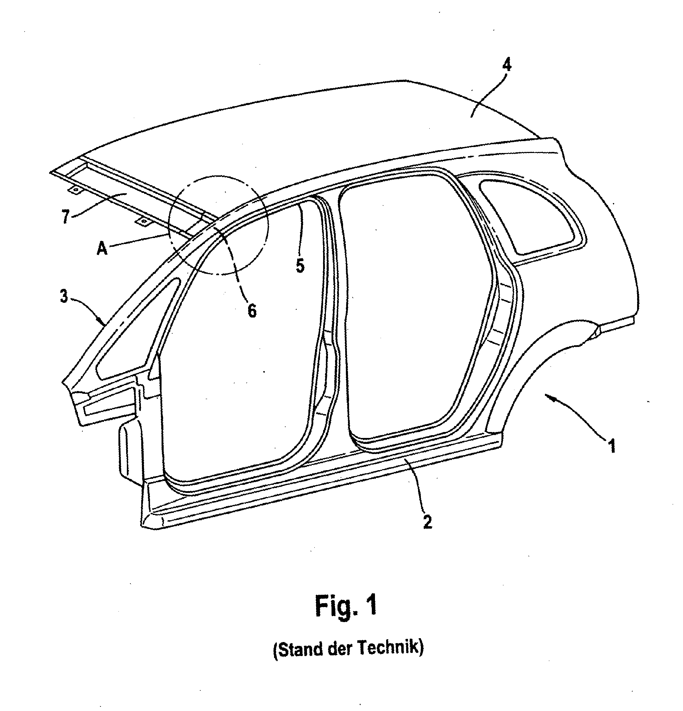

Die Figur 1 zeigt den seitlichen Teil der Karosserie 1 eines Kraftfahrzeugs wie er aus dem Stand der Technik bekannt ist. Er umfasst eine äußere Seitenwand 2, die A-Säule 3 und das Dach 4. Die äußere Seitenwand 2 umfasst das außenliegende Profilteil 5 der A-Säule. Im Anbindungsbereich A ist das innenliegende A-Säulenprofil 6 der A-Säule 3 mit dem vorderen Dachrahmenprofil 7 verschweißt.

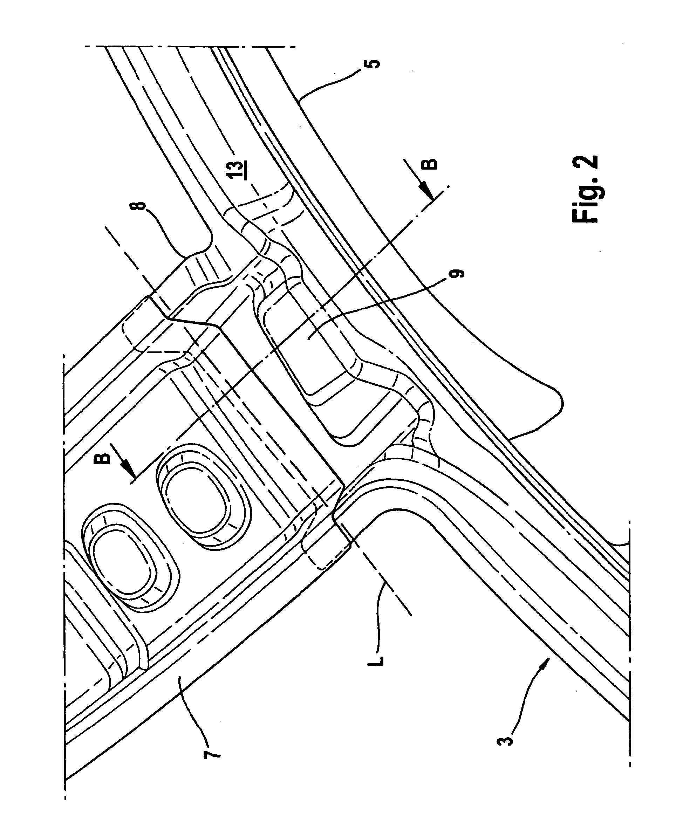

Fig. 2 zeigt den Anbindungsbereich A der Fig. 1 erfindungsgemäß ausgebildet und in vergrößerter Darstellung. Der seitliche Dachkanal 13 der A-Säule 3 weist ein unterhalb der gestrichelten Linie L befindliches Ansatzstück 8 auf, d.h. der seitliche Dachkanal 13 und das Ansatzstück 8 sind einstückig ausgebildet. Das seitliche Dachkanal 13 besitzt ein nach oben gerichtetes Prägefeld 8, damit es mit dem innenliegenden Profilteil 5 der A-Säule 3 verschweißt werden kann.

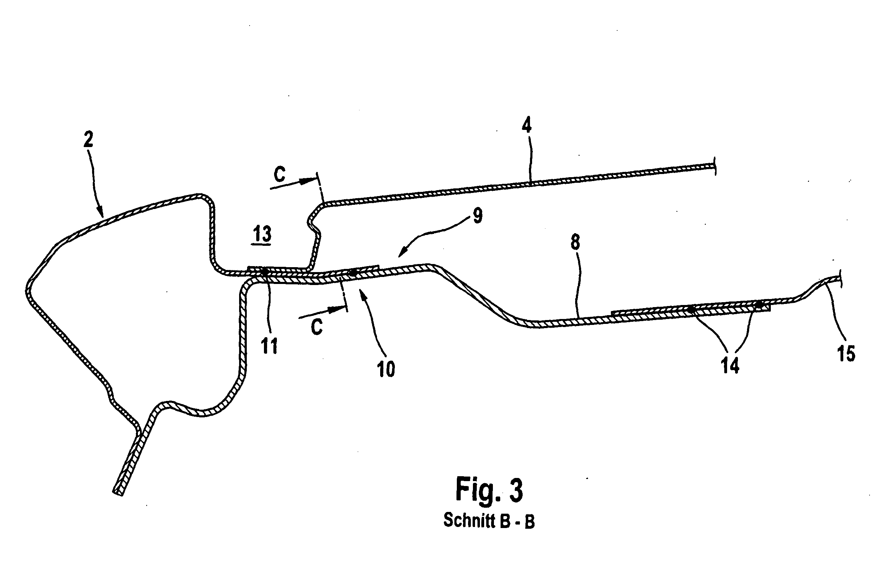

Fig. 3 zeigt den Schnitt B-B der Fig. 2 für den Fall einer lasergeschweißten Konstruktion. Der seitliche Dachkanal 13 besitzt ein Ansatzstück 8 mit plateauförmigem Prägefeld 9. Durch das Prägefeld 9 hat es sich im Vergleich zum Stand der Technik dem Dach 4 angenähert. Schweißpunkt 11 verbindet den seitlichen Dachkanal 13 mit dem Ansatzstück 8 und der Seitenwand 2.
Mit dem Schweißpunkt 10 ist die Seitenwand mit dem Ansatzstück 8 verschweißt. Die Schweißpunkte 14 verbinden das Ansatzstück 8 mit dem Dachrahmen 15.

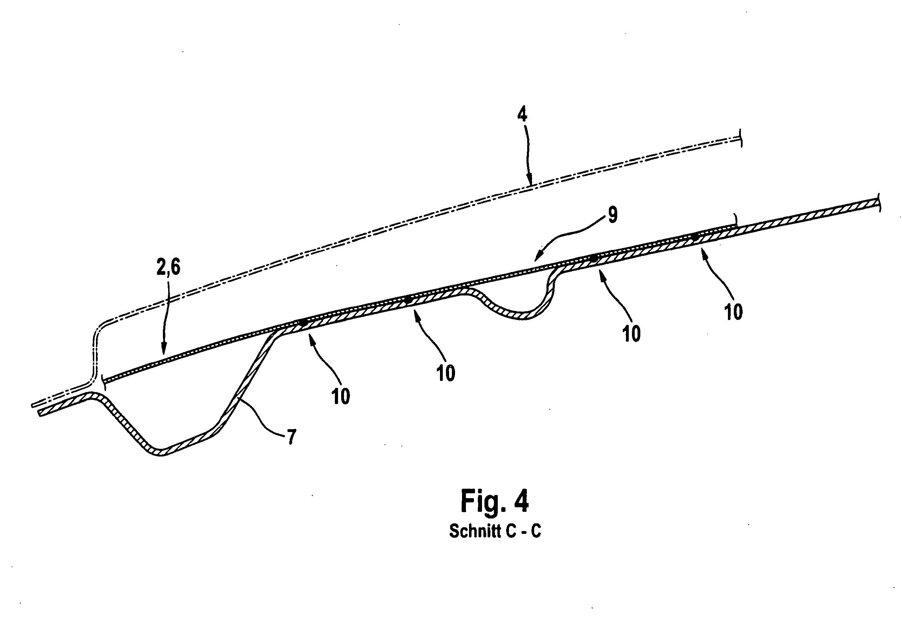

Fig. 4 zeigt den Schnitt C-C der Fig. 3, und zwar für den Fall einer lasergeschweißten Konstruktion. Man erkennt in dieser Darstellung die zusätzlichen Schweißpunkte 11 zwischen der äußeren Seitenwand 2 und dem seitlichen Dachkanal 13. Die zusätzlichen Schweißpunkte 11 verstärken die Anbindung der Seitenwand an den seitlichen Dachkanal 13 in einem Bereich von ca. 13 cm, gerechnet ab dem innenliegenden Profilteil der Seitenwand 2.

### Bezugszeichenliste

- 01: Karosserie
- 02: äußere Seitenwand
- 03: A-Säule
- 04: Dach
- 05: außenliegendes A-Säulenprofil
- 06: innenliegendes A-Säulenprofil
- 07: vorderes Dachrahmenprofil
- 08: Ansatzstück
- 09: Prägefeld
- 10: Schweißpunkt
- 11: Schweißpunkt
- 13: seitlicher Dachkanal
- 14: Schweißpunkt
- 15: Dachrahmen

- A: Anbindungsbereich
- L: Linie

## Patentansprüche

1. Karosseriesäule eines Kraftfahrzeugs in der Form eines Hohlprofils mit einem innenliegenden Profilteil (6), einem außenliegenden Profilteil (5) und einem in der Säule (3) angeordneten Verstärkungsblech,
**dadurch gekennzeichnet,**
**dass** ein mit einem Prägefeld (9) versehenes Ansatzstück (8) zum Verschweißen der Säule mit dem seitlichen Dachkanal (13) vorgesehen ist, wobei das Ansatzstück beim Verstärkungsblech seitlich nach innen angeformt ist und das Prägefeld mit dem seitlichen Dachkanal (13) verschweißt ist oder wobei das Ansatzstück ein separates Bauteil in Gestalt einer dreischenkeligen Knotenverbindung ist, das mit dem seitlichen Dachkanal (13) einerseits und mit dem innenliegenden Profilteil und/oder dem Verstärkungsblech andererseits verschweißt ist.

2. Karosseriesäule nach Anspruch 1, wobei das Ansatzstück beim Verstärkungsblech seitlich nach innen angeformt ist,
**dadurch gekennzeichnet,**
**dass** ein weiteres Ansatzstück mit einem Prägefeld beim innenliegenden Profilteil seitlich nach innen angeformt ist, und dass das Prägefeld mit dem seitlichen Dachkanal (13) verschweißbar ist.

3. Karosseriesäule nach Anspruch 1,
**dadurch gekennzeichnet,**
**dass** das Prägefeld in einem Bereich bis etwa 13 cm vom innenliegenden Profilteil aus gesehen angeordnet ist.

4. Karosseriesäule nach Anspruch 1,
**dadurch gekennzeichnet,**
**dass** die Karosseriesäule eine B-Säule ist.

5. Karosseriesäule nach Anspruch 1,
**dadurch gekennzeichnet,**
**dass** die Karosseriesäule eine C-Säule ist.

6. Karosseriesäule nach Anspruch 1,
**dadurch gekennzeichnet,**
**dass** die Karosseriesäule eine A-Säule ist, und die A-Säule mittels des Ansatzstücks mit dem vorderen Dachrahmenprofil sowie dem seitlichen Dachkanal verschweißbar ist.

## Claims

1. A body pillar of a motor vehicle in the form of a hollow section, comprising an inwardly disposed section part (6), and outwardly disposed section part (5) and a reinforcing sheet arranged in the pillar (3), **characterized in that** an end piece (8) provided with an embossing field (9) for welding the pillar with the lateral roof duct (13), with the end piece being secured laterally to the inside at the reinforcing sheet and the embossing field being welded together with the lateral roof duct (13), or with the end piece being a separate component in the form of a three-arm node connection which is welded together with the lateral roof duct (13) on the one hand and with the inwardly disposed section part and/or the reinforcing sheet on the other hand.

2. A body pillar according to claim 1, with the end piece being secured laterally to the inside at the reinforcing sheet, **characterized in that** a further end piece with an embossing field is secured laterally to the inside at the inwardly disposed section part and the embossing field can be welded together with the lateral roof duct (13).

3. A body pillar according to claim 1, **characterized in that** the embossing field is arranged in a region up to approx. 13 cm as seen from the inwardly disposed section part.

4. A body pillar according to claim 1, **characterized in that** the body pillar is a B-pillar.

5. A body pillar according to claim 1, **characterized in that** the body pillar is a C-pillar.

6. A body pillar according to claim 1, **characterized in that** the body pillar is an A-pillar, and the A-pillar can be welded together by means of the end piece with the front roof frame section and the lateral roof duct.

## Revendications

1. Montant de carrosserie d'un véhicule à moteur prenant la forme d'un profilé creux avec une partie de profilé intérieure (6), une partie de profilé extérieure (5) et une tôle de renfort disposée dans le montant (3), **caractérisé en ce qu'**une pièce d'épaulement (8) munie d'une zone emboutie (9) est prévue pour le soudage du montant avec le canal de toiture latéral (13), la pièce d'épaulement étant formée latéralement vers l'intérieur sur la tôle de renfort et la zone emboutie étant soudée au canal de toiture latéral (13) ou bien la pièce d'épaulement étant un élément séparé prenant la forme d'un assemblage de noeud à trois bras qui est soudé d'une part au canal de toiture latéral (13) et d'autre part à la partie de profilé intérieure et/ou à la tôle de renfort.

2. Montant de carrosserie selon la revendication 1, dans lequel la pièce d'épaulement est formée latéralement vers l'intérieur sur la tôle de renfort, **caractérisé en ce qu'**une autre pièce d'épaulement avec une zone emboutie est formée latéralement vers l'intérieur sur la partie de profilé intérieure et **en ce que** la zone emboutie peut être soudée au canal de toiture latéral (13).

3. Montant de carrosserie selon la revendication 1, **caractérisé en ce que** la zone emboutie est disposée dans une zone allant jusqu'à environ 13 cm de la partie de profilé intérieure.

4. Montant de carrosserie selon la revendication 1, **caractérisé en ce que** le montant de carrosserie est un montant B.

5. Montant de carrosserie selon la revendication 1, **caractérisé en ce que** le montant de carrosserie est un montant C.

6. Montant de carrosserie selon la revendication 1, **caractérisé en ce que** le montant de carrosserie est un montant A, et le montant A peut être soudé au moyen de la partie d'épaulement au profilé de toiture antérieur et au canal de toiture latéral.
